# EUROPEAN PATENT APPLICATION

(11) **EP 3 875 548 A1**
(43) Date of publication of application: **08.09.2021**
(21) Application number: 21160894.8
(22) Date of filing: 05.03.2021
(51) Int. Cl.: C09D 5/18, C09D 7/43, C09D 7/45, C09D 7/61, C09D 175/04, C08K 3/36, C08K 5/098, C08K 3/32

(54) **FIRE PROTECTION AND RETARDANT COATINGS**

(30) Priority: 05.03.2020 GB 202003189
(71) Applicant: Intumescent Systems Ltd, Dover Kent CT15 7JG (GB)
(72) Inventor: Ward, Derek, Dover, Kent CT15 7JG (GB)
(74) Representative: Fry, David John

(57) **Abstract**

An intumescent water-based coating whose composition comprises defined ranges by weight of water, weight water soluble polycarboxylate biocide, antifoam, colloidal silica, polysaccharide, hydroxy ethyl cellulose, ammonium polyphosphate, and polyurethane resin.

## Description

### Field of the Invention

This invention relates to fire protection/ retardant intumescent water based coatings and more especially to such coatings for timber surfaces.

### Background to the invention

Intumescent containing fire protection coatings are known but many fail to meet the criteria imposed by various Governmental bodies that the coating remains in place to prevent the passage of fire and smoke for a minimum period of 30 minutes. Typical of such requirements are those set by the European SPI test. Coatings in accordance with this invention have been found to exceed this minimum time period.

### Summary of the Invention

The invention provides an intumescent water-based coating whose composition comprises between 43.13 and 52.71% by weight water, between 0.89 and 1.09% by weight water soluble polycarboxylate, between 0.134 and 0.164% by weight biocide, between 0.18 and 0.219% by weight antifoam, between 2.68 and 3.28% by weight colloidal silica, between 8.95 and 10.95% by weight polysaccharide, between 0.90 and 1.09% by weight hydroxy ethyl cellulose, between 14.33 and 17.51% by weight ammonium polyphosphate, and between 18.81% and 22.99% by weight polyurethane resin.

A preferred coating composition comprises between 45.52 and 50.32% by weight water, between 0.94 and 1.04% by weight water soluble polycarboxylate, between 0.142 and 0.156% by weight biocide, between 0.19 and 0. 23% by weight antifoam, between 2.83 and 3.13% by weight colloidal silica, between 9.45 and 10.45% by weight polysaccharide, between 0.95 and 1.00% by weight hydroxy ethyl cellulose, between 15.12% and 16.72% by weight ammonium polyphosphate, and between 19.85 and 21.95% by weight polyurethane resin.

Preferably, the water content of the coating composition is 47.917% by weight.

Preferably the water soluble polycarboxylate content of the coating composition is 0.99% by weight.

Preferably the biocide content of the coating composition is 0.149% by weight.

Preferably the antifoam content of the composition is 0.199% by weight.

Preferably the colloidal silica content of the composition is 2.98% by weight.

Preferably the polysaccharide content of the composition is 9.95% by weight.

Preferably the hydroxy ethyl cellulose content of the composition is 0.995% by weight.

Preferably the ammonium polyphosphate content of the composition is 15.92% by weight.

Preferably the polyurethane resin content is 20.9% by weight.

### Detailed description of the invention

The invention sets out to produce a fire proofed protective coating particularly for products or structures produced from timber and like surfaces. A method of producing a preferred coating in accordance with the invention will now be described.

The chemical composition of the coating to be produced is as follows: by weight, 47.917% water; 0.99% of water soluble polycarboxylate to keep the mix in suspension; 0.149% of biocide to preserve the coating; 0.199% of antifoam to control foaming of the coating; 2.98% of colloidal silica as a nucleating agent; 9,95% of polysaccharide as a char enhancer; 0.995% of hydroxy ethyl cellulose as a thickener; 15.92% of ammonium polyphosphate as an acid donor; and 20.90% of polyurethane resin to bind the coating.

The method of production comprises the sequential steps of mixing together in a suitable vessel 23.64% by weight of the water and the above- mentioned quantities of water mixed with water soluble polycarboxylate, biocide, colloidal silica and polysaccharide.

Once thoroughly mixed, a pre-mixed solution of 4.47% by weight water together with the specified quantity of hydroxyethyl cellulose is added to the vessel while stirring. The vessel contents are then mixed thoroughly in the vessel for a period approximating to 20 minutes.

The remaining quantity of water and the specified quantity of ammonium polyphosphate are then added to the vessel and the contents mixed for a period approximating to 10 minutes.

The vessel is then scraped down and the vessel contents mixed for a further period approximating to 10 minutes.

The specified quantity of polyurethane is then added to the mix and the vessel contents mixed while stirring for approximately 1 minute followed by a final mixing of approximately 10 minutes until composition uniformity has been achieved.

The coating is then filtered as required.

As mentioned, the coating is particularly appropriate for providing a fireproofed long-lasting coating for internal and external timber products, these including all types of timber including softwoods and hardwoods to achieve the required SBI/B rating. In the presence of fire, the smoke emissions produced by the coating are significantly reduced.

Coatings in accordance with this invention utilise the combination of polysaccharide resin as a char enhancer, and nono silica colloidal material as a nucleating agent with suitable polyurethane binder to achieve optimum char formation.

It will be appreciated that the foregoing is merely explanatory of coatings in accordance with the invention and that modifications can readily be made without departing from the scope of the invention as set out in the appended claims.

## Claims

1. An intumescent water-based coating whose composition comprises between 43.13 and 52.71 % by weight water, between 0.89 and 1.09% by weight water soluble polycarboxylate, between 0.134 and 0.164% by weight biocide, between 0.18 and 0.219 by weight antifoam, between 2.68 and 3.28% by weight colloidal silica, between 8.95 and 10.95% by weight polysaccharide, between 0.90 and 1.09% by weight hydroxy ethyl cellulose, between 14.33 and 17.51 % by weight ammonium polyphosphate, and between 18.81 and 22.99% by weight polyurethane resin.

2. A coating as claimed in claim 1 whose composition comprises between 45.52 and 50.32% by weight water, between 0.94 and 1.04% by weight water soluble polycarboxylate, between 0.142 and 0.156% by weight biocide, between 0.19 and 0. 23% by weight antifoam, between 2.83 and 3.13% by weight colloidal silica, between 9.45 and 10.45% by weight polysaccharide, between 0.95 and 1.00% by weight hydroxy ethyl cellulose, between 15.12% and 16.72% by weight ammonium polyphosphate, and between 19.85 and 21.95% by weight polyurethane resin.

3. A coating as claimed in claim 1 and claim 2 wherein the water content of the coating composition is 47.917% by weight.

4. A coating as claimed in any one of the preceding claims wherein the water soluble polycarboxylate content of the coating composition is 0.99%by weight.

5. A coating as claimed in any one of the preceding claims wherein the biocide content of the coating composition is 0.149% by weight.

6. A coating as claimed in any one of the preceding claims wherein the antifoam content of the composition is 0.199% by weight.

7. A coating as claimed in any one of the preceding claims wherein the colloidal silica content of the composition is 2.98% by weight.

8. A coating as claimed in any one of the preceding claims wherein the polysaccharide content of the composition is 9.95% by weight.

9. A coating as claimed in any one of the preceding claims wherein the hydroxy ethyl cellulose content of the composition is 0.995% by weight.

10. A coating as claimed in any one of the preceding claims wherein the ammonium polyphosphate content of the composition is 15.92% by weight.

11. A coating as claimed in any one of the preceding claims wherein the polyurethane resin content is 20.9% by weight.
